Europäisches Patentamt

European Patent Office

Office européen des brevets

(11) Veröffentlichungsnummer: **0 275 352 B1**

(12) **EUROPÄISCHE PATENTSCHRIFT**

(45) Veröffentlichungstag der Patentschrift: **03.06.92**

(21) Anmeldenummer: **87109446.2**

(22) Anmeldetag: **01.07.87**

(51) Int. Cl.⁵: **H02H 3/087**, H02H 3/06

(54) Schaltungsanordnung zum Schutz elektronischer Geräte gegen Überlastung.

(30) Priorität: **13.12.86 DE 3642624**

(43) Veröffentlichungstag der Anmeldung:
**27.07.88 Patentblatt  88/30**

(45) Bekanntmachung des Hinweises auf die
Patenterteilung:
**03.06.92 Patentblatt  92/23**

(84) Benannte Vertragsstaaten:
**AT BE CH DE ES FR GB GR IT LI LU NL SE**

(56) Entgegenhaltungen:
**DE-A- 2 648 102**
**DE-C- 3 121 754**
**FR-A- 2 254 136**
**US-A- 4 019 096**
**US-A- 4 394 703**

(73) Patentinhaber: **KE KOMMUNIKATIONS-
ELEKTRONIK GMBH & CO
Kabelkamp 20
W-3000 Hannover 1(DE)**

(72) Erfinder: **Brahms, Martin, Dipl-Ing.
Silurweg 16
W-3000 Hannover 91(DE)**

(74) Vertreter: **Döring, Roger, Dipl.-Ing.
Kabelkamp 20
W-3000 Hannover 1(DE)**

**Beschreibung**

Die Erfindung bezieht sich auf eine Schaltungsanordnung zum Schutz eines aus einer Gleichspannungsquelle gespeisten elektronischen Geräts gegen Überlastung, das am Anfang bzw. Ende einer Anschlußleitung angeordnet ist, über die nachrichtentechnische Signale als digitale Signale übertragen werden, bei welcher

- zwischen der Gleichspannungsquelle und der Anschlußleitung in Reihe mit einem ohmschen Widerstand ein strombegrenzender Transistor eingeschaltet ist, dessen Stromdurchlässigkeit in Abhängigkeit von der Größe der am Widerstand abfallenden Spannung regelbar ist,
- an die Steuerelektrode des Transistors ein Kippspannungsgenerator mit seinem Ausgang angeschlossen ist, durch welchen der Transistor bei Überlast an der Anschlußleitung periodisch für eine einstellbare Zeitdauer abschaltbar und wieder einschaltbar ist und
- der Eingang des Kippspannungsgenerators über eine Diode an den Transistor und über einen Kondensator an einen Pol der Gleichspannungsquelle angeschlossen ist (DE-PS 31 21 754).

Eine "Überlastung" im Sinne der Erfindung kann entstehen, wenn aus irgendwelchen Gründen ein zu hoher Strom fließt. Das kann beispielsweise bei einem Kurzschluß auf der Anschlußleitung der Fall sein. Benötigt wird eine Schaltungsanordnung zum Schutz vor Überlastung von elektronischen Geräten bei jeder leitungsgebundenen Signalübertragung, bei der die Signale digitalisiert oder in Impulsform übertragen werden. Ein bekanntes Übertragungsverfahren ist beispielsweise das von der Deutschen Bundespost eingesetzte "PCM2"-Verfahren, bei dem zwei räumlich benachbarte Teilnehmer des öffentlichen Fernmeldenetzes gemeinsam über eine Anschlußleitung mit einem Amt verbunden sind. Die Buchstaben "PCM" stehen dabei für das bekannte Puls-Code-Modulations-Verfahren, mit dem nachrichtentechnische Signale als digitale Signale übertragen werden. Stellvertretend für alle möglichen Verfahren wird im folgenden dieses PCM2-Verfahren berücksichtigt.

Die analogen Signale werden beim PCM2-Verfahren im Amt mit geeigneten elektronischen Schaltungen digitalisiert und auf die Anschlußleitung gegeben. Am Ende der Anschlußleitung ist ein Gerät mit einer elektronischen Schaltung installiert, durch welche die ankommenden digitalen Signale wieder in analoge Signale umgesetzt werden. Das gilt selbstverständlich auch für die Gegenrichtung. Zum Betrieb der aktiven Elemente der elektronischen Schaltungen ist im Amt eine zentrale Stromversorgung vorhanden, die beispielsweise eine Gleichspannung von 95 V liefert. An diese Stromversorgung sind beispielsweise zehn die Schaltungen aufweisende, alle gleich aufgebaute PCM-Geräte angeschlossen, von denen Anschlußleitungen zu jeweils zwei Teilnehmern ausgehen. Wenn an einem der Geräte beispielsweise ein Kurzschluß auftritt, kann die Stromversorgung zusammenbrechen, wodurch nicht nur das betroffene Gerät ausfällt, sondern es fallen dann auch alle anderen Geräte aus.

Mit der Schaltungsanordnung nach der eingangs geschilderten DE-PS 31 21 754 sollen elektronische Geräte vor den Auswirkungen einer Überlast geschützt werden. Diese bekannte Schaltungsanordnung wird aus einer Hilfsspannungsquelle versorgt, von deren Hilfsspannung eine Referenzspannung abgeleitet wird. Ein Komparator vergleicht die Referenzspannung mit dem Spannungsabfall an einem in Reihe mit dem strombegrenzenden Transistor liegenden Widerstand. Wenn der über diesen Widerstand fließende Strom einen Grenzwert erreicht bzw. überschreitet, werden die Steuerspannung des Transistors und damit dessen Stromdurchlässigkeit vermindert. Beim Erreichen eines Grenzwerts der Stromdurchlässigkeit des Transistors wird ein mit dem Komparator verbundener Kondensator aufgeladen, durch welchen der Transistor schlagartig gesperrt wird. Er bleibt auch während der folgenden Entladung des Kondensators gesperrt. Die Ladezeit des Kondensators, während derer der Transistor als Strombegrenzer arbeitet, ist lang im Verhältnis zur Entladezeit. Der Transistor bleibt daher lange im strombegrenzenden Zustand, so daß er relativ stark erwärmt wird.

Der Erfindung liegt die Aufgabe zugrunde, die eingangs geschilderte Schaltungsanordnung so weiterzubilden, daß sichergestellt ist, daß bei einer Überlast an einer an ein Gerät angeschlossenen Leitung keine Beeinträchtigung der anderen Geräte auftritt und daß insbesondere keine die Schaltungsanordnung beeinflussende Erwärmung des strombegrenzenden Transistors eintreten kann.

Diese Aufgabe wird gemäß der Erfindung dadurch gelöst,

- daß an die Steuerelektrode des Transistors unter Zwischenschaltung eines ohmschen Widerstands ein Operationsverstärker mit seinem Ausgang angeschlossen ist, dessen einer Eingang an einem parallel zur Gleichspannungsquelle geschalteten Spannungsteiler liegt, während sein anderer Eingang zwischen dem Transistor und dem in Reihe mit demselben liegenden ohmschen Widerstand angeschlossen ist,
- daß der Kippspannungsgenerator einen Operationsverstärker enthält, dessen Ausgang über eine Diode mit der Steuerelektrode des Transistors verbunden ist, dessen erster Eingang mit dem parallel zur Gleichspannungsquelle liegenden Spannungsteiler verbunden ist und dessen zweiter Eingang über die Diode an den strombegrenzenden Transistor und über den Kondensator an einen Pol der Gleichspannungsquelle angeschlossen ist und

- daß der zweite Eingang des Operationsverstärkers mit dessen Ausgang einerseits über die Reihenschaltung einer Diode und eines Widerstandes sowie andererseits in einem parallelen Zweig über einen Widerstand verbunden ist.

Mit dieser Schaltungsanordnung wird eine an einer Anschlußleitung auftretende Überlast, beispielsweise ein Kurzschluß, in dem betroffenen Gerät abgeblockt. Die Versorgungsspannung fällt dabei nahezu vollständig am strombegrenzenden Transistor ab. Die zentrale Stromversorgung bleibt von der Überlast ebenso unberührt, wie alle anderen angeschlossenen Geräte. Im Falle einer Überlast wird zwar ein erhöhter, aber begrenzter Strom nicht verhindert, er wird jedoch durch den speziellen Aufbau des Kippspannungsgenerators auf eine kurze Zeit beschränkt. Die einzelnen aktiven Elemente der Schaltungsanordnung können sich also nicht wesentlich erwärmen. Das gilt insbesondere für den strombegrenzenden Transistor, der vorzugsweise als MOSFET ausgebildet ist. Besondere Maßnahmen zum Abführen von Wärme sind also nicht erforderlich. Wegen der ständigen Wiedereinschaltung durch den Kippspannungsgenerator, machen sich kurzfristige Störungen für den Betrieb der Schaltungsanordnung nicht bemerkbar. Die Zeit während der ein erhöhter Strom fließt, kann im Verhältnis zu der Zeit, in der kein Strom fließt, auf einfache Weise durch entsprechende Dimensionierung des Kippspannungsgenerators eingestellt werden.

Ein Ausführungsbeispiel des Erfindungsgegenstandes ist in den Zeichnungen dargestellt.

Es zeigen:

Fig. 1 einen Ausschnitt eines "Amtes" in schematischer Darstellung.

Fig. 2 die Schaltungsanordnung nach der Erfindung.

Fig. 3 den Spannungsverlauf am Eingang und am Ausgang des in Fig. 2 dargestellten Kippspannungsgenerators.

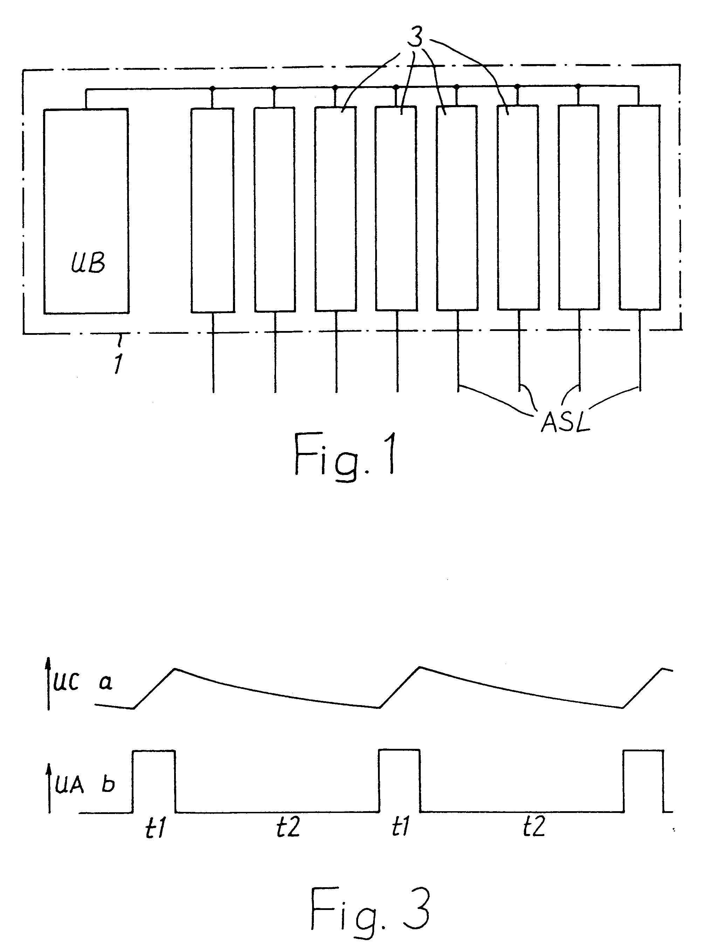

In Fig. 1 ist durch eine strichpunktierte Linie ein "Amt 1" des öffentlichen Fernmeldenetzes gekennzeichnet. Zu diesem Amt gehört eine Gleichspannungsquelle UB, welche eine konstante Gleichspannung von beispielsweise 95 V liefert, die maximal um 2 Volt schwankt. An die Gleichspannungsquelle UB sind im dargestellten Ausführungsbeispiel acht PCM2-Geräte 3 parallel zueinander angeschlossen. Von jedem PCM2-Gerät 3 geht eine Anschlußleitung ASL zu jeweils zwei Teilnehmern ab, die durch digitale Übertragung auch gleichzeitig telefonieren können.

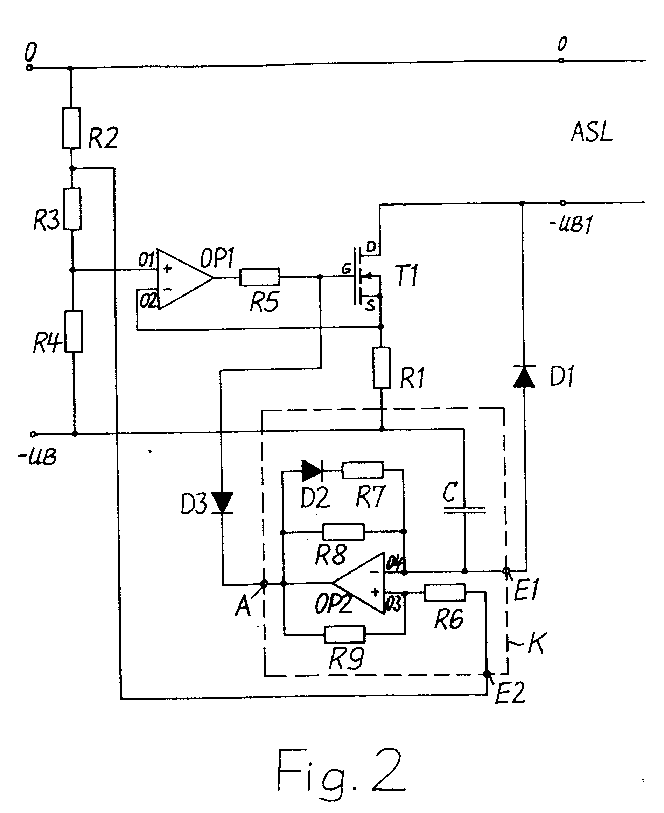

In jedem der PCM2-Geräte 3 ist beispielsweise eine Schaltungsanordnung nach Fig. 2 enthalten. Sie weist als aktives, strombegrenzendes Bauteil einen Transistor T1 auf, der in Reihe mit einem ohmschen Widerstand R1 liegt. Der Transistor T1 kann ein Feldeffekttransistor oder auch ein bipolarer Transistor sein. In bevorzugter Ausführungsform wird als Transistor T1 ein MOSFET eingesetzt. In der folgenden Beschreibung wird an Stelle der Bezeichnung "Transistor T1" für das strombegrenzende Bauteil die Bezeichnung "MOSFET T1" verwendet.

Der MOSFET T1 ist über einen aus den Widerständen R2, R3 und R4 bestehenden Spannungsteiler, der parallel zur Gleichspannungsquelle UB liegt, an dieselbe angeschlossen. An der Anschlußleitung ASL liegt die Speisespannung UB1 an, die bis auf einen geringen Abfall am Widerstand R1 und am Bauteil R4 der Spannung der Gleichspannungsquelle UB entspricht.

An die Anschlußleitung ASL ist ein Kippspannungsgenerator K mit einem Eingang E1 angeschlossen. Der Kippspannungsgenerator K ist außerdem mit einem Eingang E2 über den von den Widerständen R2, R3 und R4 gebildeten Spannungsteiler mit der Gleichspannungsquelle UB verbunden, wobei der Eingang E2 zwischen den Widerständen R2 und R3 angeschlossen ist. Der Ausgang A des Kippspannungsgenerators K ist mit der Steuerelektrode des MOSFETS T1 verbunden.

Die Schaltungsanordnung nach Fig. 2 arbeitet unter Berücksichtigung der bisher beschriebenen Einzelheiten prinzipiell wie folgt:

Bei störungsfreiem Betrieb ist der MOSFET T1 stromdurchlässig. Die Speisespannung UB1 entspricht dann bis auf einen geringen Spannungsabfall am Widerstand R1 und am MOSFET T1 der Betriebsspannung, die von der Gleichspannungsquelle UB des Amtes 1 geliefert wird. Durch eine Überlast auf der Anschlußleitung ASL, beispielsweise einen Kurzschluß, fließt über den MOSFET T1 ein erhöhter Strom. In diesem Fall begrenzt die Schaltungsanordnung diesen Strom. Wegen der dabei auftretenden Erwärmung des MOSFETS T1 darf das nicht zu lange geschehen. Dafür sorgt der Kippspannungsgenerator K, der bei Normalbetrieb nicht arbeitet. Eine Beeinflussung des MOSFETS T1 tritt dann nicht auf. Im Überlastfall fällt am MOSFET T1 wegen seiner strombegrenzenden Wirkung eine erhöhte Spannung ab, so daß der Kippspannungsgenerator K zu arbeiten beginnt. Er liefert an seinem Ausgang A eine Kippspannung, durch welche der MOSFET T1 jetzt, d. h. bei Überlast, periodisch gesperrt wird. Diese Arbeitsweise des Kippspannungsgenerators K wird weiter unten noch ausführlicher erläutert. Wenn die Überlast aufgehoben ist, wird der Spannungsabfall am MOSFET T1 geringer und der Kippspannungsgenerator K arbeitet nicht mehr. Die Schaltungsanordnung hat dann wieder Normalbetrieb.

Zur genaueren Erläuterung der Schaltungsanordnung wird zunächst deren weiterer Aufbau beschrieben:

Der in Reihe mit dem MOSFET T1 liegende ohmsche Widerstand R1 ist auf der anderen Seite mit dem gleichen Pol der Gleichspannungsquelle UB wie der Widerstand R4 verbunden. Zwischen der Drainelektrode D des MOSFETs T1 und dem anderen Pol der Gleichspannungsquelle UB liegt die Betriebsspannung UB1 für die Anschlußleitung ASL an. Zwischen den Widerständen R3 und R4 ist ein Operationsverstärker OP1 mit einem Eingang O1 angeschlossen. Der Ausgang des Operationsverstärkers OP1 ist über einen Widerstand R5 mit der Steuerelektrode (Gateelektrode) G des MOSFETs T1 verbunden. Der zweite Eingang O2 des Operationsverstärkers OP1 ist an den Strompfad zwischen dem MOSFET T1 und dem Widerstand R1 angeschlossen. Im Normalfall ist die Spannung am Eingang O1 des Operationsverstärkers OP1 größer als die am Eingang O2. Der MOSFET T1 ist dann voll stromdurchlässig.

In dem Kippspannungsgenerator K ist ein Operationsverstärker OP2 enthalten, dessen Ausgang den Ausgang A des Kippspannungsgenerators K bildet. Der erste Eingang O3 des Operationsverstärkers OP2 ist über einen ohmschen Widerstand R6 zwischen den Widerständen R2 und R3 an den Spannungsteiler R2/R3/R4 angeschlossen, während der zweite Eingang O4 über eine Diode D1 mit der Drainelektrode D des MOSFETs T1 verbunden ist. An den zweiten Eingang O4 des Operationsverstärkers OP2 ist außerdem ein Kondensator C angeschlossen, der andererseits mit einem Pol der Gleichspannungsquelle UB verbunden ist. Der zweite Eingang O4 und der Ausgang des Operationsverstärkers OP2 sind einerseits über die Reihenschaltung einer Diode D2 und eines ohmschen Widerstandes R7 sowie andererseits in einem parallelen Zweig über einen ohmschen Widerstand R8 miteinander verbunden. Der Wert des Widerstandes R7 ist im vorliegenden Fall klein im Verhältnis zu dem des Widerstandes R8. Der Ausgang A des Kippspannungsgenerators K ist mit der Steuerelektrode G des MOSFETs T1 über eine Diode D3 verbunden.

Die damit vollständig beschriebene Schaltungsanordnung nach Fig. 2 arbeitet wie folgt:
Wenn auf der Anschlußleitung ASL eine Überlast auftritt, beispielsweise ein Kurzschluß, fließt über den MOSFET T1 ein erhöhter Strom. Die Folge davon ist, daß am Widerstand R1 eine erhöhte Spannung abfällt. Dadurch steigt die Spannung am Eingang O2 des Operationsverstärkers OP1, so daß seine Ausgangsspannung sinkt. Der MOSFET T1 wird dadurch hochohmiger, so daß nur ein begrenzter Strom über denselben fließen kann, der so gering ist, daß keine Rückwirkungen auf die Gleichspannungsquelle UB auftreten können. Der Strom darf beispielsweise nicht höher als 60 mA werden.

Im hochohmigeren Zustand erwärmt sich der strombegrenzende MOSFET T1. Er gibt dann beispielsweise eine Leistung von 6 W ab. Ohne zusätzliche Maßnahmen würde sich die Schaltungsanordnung und damit das zugehörige Gerät schnell erwärmen. Es müßte dann für jedes einzelne Gerät eine aufwendige Kühleinrichtung eingesetzt werden. Das ist durch die Verwendung des Kippspannungsgenerators K nicht erforderlich.

Der Kippspannungsgenerator K liefert an seinem Ausgang A beispielsweise eine impulsförmige Spannung UA entsprechend Fig. 3b, durch welche der MOSFET T1 nur über relativ kurze Zeit in seinem den Strom begrenzenden Zustand gehalten wird. In einer gegenüber dieser kurzen Zeit längeren Zeit wird der MOSFET T1 gesperrt. Es fließt dann kein Strom mehr über den MOSFET T1 (bis auf einen zu vernachlässigenden Leckstrom), so daß derselbe insgesamt nicht wesentlich erwärmt wird.

Die Diode D1, über welche der Kippspannungsgenerator K an die Drainelektrode D des MOSFETs T1 angeschlossen ist, ist im normalen Betrieb der Schaltungsanordnung durchgeschaltet. Am Ausgang A des Kippspannungsgenerators K liegt dann eine hohe Spannung an. Die Diode D3, welche zwischen dem Ausgang A des Kippspannungsgenerators K und der Steuerelektrode G des MOSFETs T1 angeschlossen ist, ist dann gesperrt. In diesem Fall ist der MOSFET T1 für seine Aufgabe der Strombegrenzung funktionsfähig. Er kann also bei voller Stromdurchlässigkeit niederohmig oder in der Begrenzungsfunktion hochohmiger sein.

Wenn der Spannungsabfall am MOSFET T1 infolge einer Überlast steigt, wird die Diode D1 gesperrt. Der Kippspannungsgenerator K fängt dann an zu arbeiten. Die Spannung an seinem Ausgang A fällt und die Diode D3 wird stromdurchlässig. Der MOSFET T1 wird dadurch völlig gesperrt. Er pendelt zwischen den beiden Zuständen "gesperrt" und "strombegrenzend" entsprechend dem Verlauf der Spannung UA (Fig. 3b) am Ausgang A des Kippspannungsgenerators K. Der Verlauf der Spannung UA entspricht dem Verlauf der Spannung UC am Eingang E1 des Kippspannungsgenerators K. Dieser Verlauf entsteht wie folgt:
Solange die Diode D1 stromdurchlässig ist, liegt am zweiten Eingang O4 des Operationsverstärkers OP2 ein niedrigeres Potential als am ersten Eingang O3 desselben. Das Potential am ersten Eingang O3 des Operationsverstärkers OP2 wird bestimmt von dem aus den Widerständen R6 und R9 bestehenden Spannungsteiler. Der zweite Eingang O3 ist zwischen den Widerständen R6 und R9 an den Spannungsteiler angeschlossen. Der Spannungsteiler R6/R9 seinerseits liegt zwischen dem Ausgang des Operationsverstärkers OP2 und dem Eingang E2 des Kippspannungsgenerators K. Das Potential am Eingang E2 des Kippspannungsgenerators K entspricht der zwischen den Widerständen R2 und R3 abgegriffenen Spannung. Diese bleibt während jeder Phase im Betrieb der Schaltungsanordnung im zulässigen Rahmen der Schwankung der Gleichspannungsquelle UB konstant. Am Ausgang des Operationsverstärkers OP2 liegt dann ein positives Potential. Die Diode D3 ist gesperrt und beeinflußt den MOSFET T1 nicht.

Bei Überlast fällt am MOSFET T1 eine erhöhte Spannung ab. Die Diode D1 wird dadurch gesperrt, so daß der Kippspannungsgenerator K zu arbeiten beginnt. Nach Sperrung der Diode D1 wird der Kondensator C über die Widerstände R7 und R8 aufgeladen. Die Spannung UC des Kondensators C steigt entsprechend Fig. 3a an. Die Ladung erfolgt solange, bis das Potential am zweiten Eingang O4 des Operationsverstärkers OP2 größer wird als das am ersten Eingang O3. Solange liegt am Ausgang des Operationsverstärkers OP2 hohes Potential für eine Zeit t1 (Fig. 3b) an und die Diode D3 bleibt gesperrt.

Wenn das Potential am zweiten Eingang O4 des Operationsverstärkers OP2 größer als das am ersten Eingang O3 wird, kippt der Operationsverstärker OP2 um. An seinem Ausgang steht ein niedrigeres Potential an, die Diode D3 wird durchgeschaltet und der MOSFET T1 wird gesperrt. Der Kodensator C wird jetzt mit dem aus Fig. 3a ersichtlichen Spannungsverlauf über den Widerstand R8 entladen. Während der Entladezeit t2 (Fig. 3b) liegt am Ausgang des Operationsverstärkers OP2 niedriges Potential und der MOSFET T1 bleibt die ganze Zeit gesperrt. Nach Entladung des Kondensators C kippt der Operationsverstärker OP2 wieder in seine Ausgangslage mit hohem Potential am Ausgang zurück, so daß der MOSFET T1 wieder in seinen strombegrenzenden Zustand gebracht wird.

Die Zeiten t1 und t2 können sich beispielsweise wie 1 : 5 bis 1 : 10 verhalten. Dieses Verhältnis ist durch geeignete Wahl der Widerstände R7 und R8 leicht einstellbar. Der Widerstand R7 ist klein im Verhältnis zum Widerstand R8, damit der Kondensator C schnell aufgeladen werden kann. Die dazu erforderliche kürzere Zeit bestimmt die strombegrenzende Zeit des MOSFETs T1 mit entsprechend geringer Erwärmung. Die Entladung des Kondensators C erfolgt wegen der Diode D2 nur über den Widerstand R8. Wenn aus irgendwelchen Gründen gewünscht wird, daß die Zeit t1 größer als die Zeit t2 ist, dann braucht nur die Diode D2 umgepolt zu werden.

Statt des aus den drei Widerständen R2, R3 und R4 bestehenden "doppelten" Spannungsteilers können grundsätzlich auch zwei getrennte Spannungsteiler parallel zueinander an die Gleichspannungsquelle UB angeschlossen werden. Der eine ist dann für den Operationsverstärker OP1 vorgesehen, während der Operationsverstärker OP2 mit dem anderen verbunden wird.

## Patentansprüche

1. Schaltungsanordnung zum Schutz eines aus einer Gleichspannungsquelle (UB) gespeisten elektronischen Geräts gegen Überlastung, das am Anfang bzw. Ende einer Anschlußleitung (ASL) angeordnet ist, über die nachrichtentechnische Signale als digitale Signale übertragen werden, bei welcher

   - zwischen der Gleichspannungsquelle (UB) und der Anschlußleitung (ASL) in Reihe mit einem ohmschen Widerstand (R1) ein strombegrenzender Transistor (T1) eingeschaltet ist, dessen Stromdurchlässigkeit in Abhängigkeit von der Größe der am Widerstand (R1) abfallenden Spannung regelbar ist,

   - an die Steuerelektrode (G) des Transistors (T1) ein Kippspannungsgenerator (K) mit seinem Ausgang (A) angeschlossen ist, durch welchen der Transistor (T1) bei Überlast an der Anschlußleitung periodisch für eine einstellbare Zeitdauer abschaltbar und wieder einschaltbar ist und

   - der Eingang des Kippspannungsgenerators (K) über eine Diode (D1) an den Transistor (T1) und über einen Kondensator (C) an einen Pol der Gleichspannungsquelle (UB) angeschlossen ist, dadurch gekennzeichnet,

   - daß an die Steuerelektrode des Transistors (T1) unter Zwischenschaltung eines ohmschen Widerstands (R5) ein Operationsverstärker (OP1) mit seinem Ausgang angeschlossen ist, dessen einer Eingang (O1) an einem parallel zur Gleichspannungsquelle (UB) geschalteten Spannungsteiler (R2,R3,R4) liegt, während sein anderer Eingang (O2) zwischen dem Transistor (T1) und dem in Reihe mit demselben liegenden ohmschen Widerstand (R1) angeschlossen ist,

   - daß der Kippspannungsgenerator (K) einen Operationsverstärker (OP2) enthält, dessen Ausgang über eine Diode (D3) mit der Steuerelektrode des Transistors (T1) verbunden ist, dessen erster Eingang (O3) mit dem parallel zur Gleichspannungsquelle (UB) liegenden Spannungsteiler (R2,R3,R4) verbunden ist und dessen zweiter Eingang (O4) über die Diode (D1) an den strombegrenzenden Transistor (T1) und über den Kondensator (C) an einen Pol der Gleichspannungsquelle (UB) angeschlossen ist und

- daß der zweite Eingang (O4) des Operationsverstärkers (OP2) mit dessen Ausgang einerseits über die Reihenschaltung einer Diode (D2) und eines Widerstandes (R7) sowie andererseits in einem parallelen Zweig über einen Widerstand (8) verbunden ist.

2. Schaltungsanordnung nach Anspruch 1, dadurch gekennzeichnet, daß der Transistor (T1) als Feldeffekttransistor ausgebildet ist.

3. Schaltungsanordnung nach Anspruch 1, dadurch gekennzeichnet, daß der Transistor (T1) als MOSFET ausgebildet ist.

4. Schaltungsanordnung nach Anspruch 1, dadurch gekennzeichnet, daß der Transistor (T1) als bipolarer Transistor ausgebildet ist.

**Claims**

1. Circuit arrangement for protecting against overloading of an electronic device which is fed from a direct-voltage source (UB) and which is arranged at the beginning or, respectively, end of a subscriber line (ASL) via which communication signals are transmitted as digital signals, in which arrangement

- a current-limiting transistor (T1), the current conductivity of which is controllable in dependence on the magnitude of the voltage dropped across the resistor (R1), is connected in series with an ohmic resistor (R1) between the direct-voltage source (UB) and the subscriber line (ASL),

- the gate (G) of the transistor (T1) is connected to the output (A) of a sweep voltage generator (K), by means of which the transistor (T1) can be periodically switched off and switched on again for an adjustable period of time when an overload occurs on the subscriber line, and

- the input of the sweep voltage generator (K) is connected via a diode (D1) to the transistor (T1) and via a capacitor (C) to one terminal of the direct-voltage source (UB), characterised in that

- the gate of the transistor (T1) is connected, with interposition of an ohmic resistor (R5) to the output of an operational amplifier (OP1), one input (O1) of which is connected to a voltage divider (R2, R3, R4) connected in parallel with the direct-voltage source (UB) whilst its other input (O2) is connected between the transistor (T1) and the ohmic resistor (R1) connected in series with the latter,

- in that the sweep voltage generator (K) contains an operational amplifier (OP2), the output of which is connected via a diode (D3) to the gate of the transistor (T1), the first input (O3) of which is connected to the voltage divider (R2, R3, R4) connected in parallel with the direct-voltage source (UB) and the second input (O4) of which is connected via the diode (D1) to the current-limiting transistor (T1) and via the capacitor (C) to one terminal of the direct-voltage source (UB), and

- in that the second input (O4) of the operational amplifier (OP2) is connected to the output of the latter, on the one hand, via the series circuit of a diode (D2) and a resistor (R7) and, on the other hand, in a parallel branch via a resistor (8).

2. Circuit arrangement according to Claim 1, characterised in that the transistor (T1) is constructed as field-effect transistor.

3. Circuit arrangement according to Claim 1, characterised in that the transistor (T1) is constructed as MOSFET.

4. Circuit arrangement according to Claim 1, characterised in that the transistor (T1) is constructed as bipolar transistor.

**Revendications**

1. Agencement de circuit pour protéger contre la surcharge un appareil électronique alimenté par une source de tension continue (UB), ledit appareil étant disposé au début ou à la fin d'une ligne de raccordement (ASL) et transmettant des signaux de télécommunication sous forme de signaux numériques, dans lequel:

- un transistor de limitation de courant (T1) dont la conductivité est réglable en fonction de la valeur de la chute de tension aux bornes d'une résistance ohmique (R1), est connecté entre la source de tension continue (UB) et la ligne de raccordement (ASL), en série avec la résistance ohmique (R1),

- un générateur de tension impulsionnelle (K) est raccordé à l'électrode de commande (G) du transistor (T1) par sa sortie (1) et au moyen de laquelle le transistor (T1), en cas de surcharge sur la ligne de raccordement, peut être périodiquement et pour une durée réglable, bloqué et de nouveau remis à l'état passant et,

- l'entrée du générateur de tension impulsionnelle (K) est reliée, via une diode (D1), au transistor (T1) et, via un condensateur (C), à l'un des pôles de la source de tension continue (UB), caractérisé

- en ce que l'électrode de commande du transistor (T1) est reliée, via une résistance ohmique (R5), à la sortie d'un amplificateur opérationnel (OP1) dont l'une (O1) des entrées est raccordée à un diviseur de tension (R2, R3, R4) connecté en parallèle à la source de tension continue (UB), tandis que son autre entrée (O2) est raccordée entre le transistor (T1) et la résistance ohmique (R1) qui lui est connectée en série,

- en ce que le générateur de tension impulsionnelle (K) comporte un amplificateur opérationnel (OP2) dont la sortie est reliée, via une diode (D3), à l'électrode de commande du transistor (T1) et dont la première entrée (O3) est reliée au diviseur de tension (R2, R3, R4) connecté en parallèle à la source de tension continue (UB) et dont la deuxième entrée (O4) est reliée, via la diode (D1), au transistor de limitation de courant (T1) et, via le condensateur (C), à l'un des pôles de la source de tension continue (UB), et

- en ce que la deuxième entrée (O4) de l'amplificateur opérationnel (OP2) est reliée à la sortie dudit amplificateur via, d'une part, la connexion en série d'une diode (D2) et d'une résistance (R7) et, d'autre part, un circuit parallèle via une résistance (8).

2. Agencement de circuit selon la revendication 1, caractérisé en ce que le transistor (T1) est un transistor à effet de champ.

3. Agencement de circuit selon la revendication 1, caractérisé en ce que le transistor (T1) est un transistor MOSFET.

4. Agencement de circuit selon la revendication 1, caractérisé en ce que le transistor (T1) est un transistor bipolaire.

Fig. 1

Fig. 3

Fig. 2